# EUROPÄISCHE PATENTSCHRIFT

(11) **EP 2 405 168 B1**
(45) Veröffentlichungstag und Bekanntmachung des Hinweises auf die Patenterteilung: **06.03.2019**
(21) Anmeldenummer: 11172916.6
(22) Anmeldetag: 06.07.2011
(51) Int. Cl.: F16K 31/06, F16K 1/14, F16K 1/54

(54) **Ventilkörper und zugehöriges Magnetventil**
Valve body and corresponding electromagnetic valve
Corps de soupape et soupape électromagnétique correspondante

(30) Priorität: 06.07.2010 DE 102010026277; 06.10.2010 DE 102010047495
(43) Veröffentlichungstag der Anmeldung: 11.01.2012
(73) Patentinhaber: Kendrion (Villingen) GmbH, 78048 Villingen-Schwenningen (DE)
(72) Erfinder: Zelano, Frank, 78112 St. Georgen (DE); Vogelhuber, Jörg, 78086 Brigachtal (DE); Schulz, Florian, 78086 Brigachtal (DE); Yu, Wei, 71732 Tamm (DE)
(74) Vertreter: Westphal, Mussgnug & Partner Patentanwälte mbB

(56) Entgegenhaltungen:
- EP-A1- 1 004 066
- US-A- 3 552 437
- US-A- 5 445 361
- US-A1- 2002 145 125

## Beschreibung

Die Erfindung betrifft einen Ventilkörper für ein proportionales 3/2-Magnetventil gemäß Oberbegriff des Patentanspruchs 1 sowie ein mit dem der erfindungsgemäßen Ventilkörper ausgestattetes Magnetventil.

Ein solches 3/2-Magnetventil mit zwei Sitzventilen ist aus der EP 1 004 066 B1 bekannt. Ein erstes Sitzventil wird in üblicher Weise durch einen in einer Axialbohrung des Ventilkörpers angeordneten Ventilsitz zusammen mit einem kugelförmigen Schließelement gebildet. Mit diesem Sitzventil wird ein an einen Druckerzeuger angeschlossener Zulauf bei stromlosem Magnetventil gegenüber einem radial mit der Axialbohrung verbundener Verbraucherkanal geschlossen. Jenseitig des Ventilsitzes des ersten Sitzventils setzt sich die Axialbohrung in einer Steuerbohrung fort, die gleichzeitig eine Rücklauf bzw. Ablauf bildet. Ein von einem Anker betätigbarer, mit dem Schließelement in Wirkverbindung stehender Ventilstößel weist eine Steuerkante als weiteres Schließelement auf und kommt beim Durchdringen dieser Steuerbohrung des Ventilkörpers mit derselben unter Bildung eines zweiten Sitzventils in Wirkverbindung. Im unbestromten Zustand besteht eine Verbindung zwischen dem Verbraucherkanal und dem Abfluss. Bei einer Bestromung der Magnetspule des Magnetventils wird das kugelförmige Schließelement des ersten Sitzventils abgehoben und damit eine Verbindung zum Verbraucheranschluss hergestellt. Gleichzeitig nähert sich die Steuerkante des Ventilstößels dem zweiten Ventilsitz, wodurch der Rücklaufstrom in Abhängigkeit des Spulenstroms gedrosselt wird, um die geforderten Druckkennnlinien aufzubauen.

Weiteren Stand der Technik beschreibt die US 2002/145125 A1.

Solche bekannten 3/2-Magnetventil mit zwei Sitzventilen weisen jedoch den Nachteil auf, dass diese einen komplexen Aufbau mit einer hohen Anzahl von präzise herzustellenden Bauteilen aufweisen. Ferner müssen solche bekannten Ventile zur Einstellung der Druckkennlinien aufwendig justiert werden und leiden an einer mangelhaften Robustheit hinsichtlich ihrer Funktion, insbesondere gegenüber Temperatureinflüssen.

Zudem ist es bei diesem bekannten 3/2-Magnetventil mit zwei Sitzventilen schwierig, vorgegebene Druckkennlinien am Verbraucheranschluss zu realisieren.

Der Erfindung liegt die Aufgabe zugrunde, einen Ventilkörper sowie ein zugehöriges 3/2-Magnetventil der eingangs genannten Art anzugeben, wobei ein solcher Ventilkörper nur wenige Einzelteil aufweisen sollte, die möglichst nicht mit der bisher üblichen Präzision hergestellt werden müssen und bei dem auch eine Einstellung zur Erzielung der gewünschten proportionalen Druckkennlinie entfallen kann. Weiterhin sollen in konstruktiver einfacher Weise vorgegebene Druckkennlinien realisiert werden können, ohne dass zusätzliche Einstellmaßnahmen erforderlich sind.

Diese Aufgabe wird gelöst durch einen Ventilkörper mit den Merkmalen des Patentanspruchs 1 sowie durch ein Magnetventil mit den Merkmalen des Patentanspruchs 18.

Ein erfindungsgemäßer Ventilkörper umfasst
- eine Axialbohrung, die einen Zulauf für den Anschluss einer Druckquelle mit einem Ablauf verbindet,
- einen Ventilraum im Bereich der Axialbohrung, in welchem zulaufseitig ein erster Ventilsitz ausgebildet ist,
- wenigstens eine Radialbohrung, die den Ventilraum mit einem Verbraucheranschluss verbindet,
- ein Schließelement, das zusammen mit dem ersten Ventilsitz ein erstes Sitzventil zum Verschließen der zulaufseitigen Axialbohrung bildet, und
- ein zweites Sitzventil,
und zeichnet sich dadurch aus, dass
- in dem Ventilraum ablaufseitig ein zweiter Ventilsitz vorgesehen ist, und
- das Schließelement zusammen mit dem zweiten Ventilsitz das zweite Sitzventil zum Verschließen der ablaufseitigen Axialbohrung bildet.

Dieser erfindungsgemäße Ventilkörper mit nur einem einzigen Schließelement sowohl für den ersten als auch für den zweiten Ventilsitz erfordert gegenüber bekannten Ventilkörpern eine reduzierte Anzahl von Einzelteilen und bedingt dadurch auch einen einfacher Aufbau, so dass dadurch eine robuste Funktion, insbesondere gegenüber Temperatureinflüssen erzielt wird, aber dennoch so ausgestaltet werden kann, dass ein proportionales Steuerverhalten erreicht wird. Die Einzelteile müssen nicht mit der bisher üblichen hohen Präzision hergestellt werden und ebenso entfällt eine Einstellung des Schließelementes. Insgesamt werden dadurch die Produktionskosten eines solchen erfindungsgemäßen Ventilkörpers erheblich gesenkt.

Damit werden sowohl der erste als auch der zweite Ventilsitz von diesem Schließelement betätigt, so dass durch den Wechsel des Schließelementes zwischen diesen beiden Ventilsitzen ein zum Spulenstrom des zugehörigen Magnetventils gewünschter proportionaler Druckverlauf im Ablauf einstellen lässt.

Das Schließelement des Ventilkörpers ist im Wesentlichen kugelförmig ausgebildet, wobei der Ventilraum mit wenigstens zwei hinsichtlich eines Durchmessers des kugelförmigen Schließelementes gegenüberliegenden und radialverlaufenden, speichenartigen Führungselementen mit axialseitigen Führungsflächen zur axialen Führung des kugelförmigen Schließelementes derart ausgestaltet ist, dass das kugelförmige Schließelement zwischen den Führungsflächen im Wesentlichen nur in axialer Richtung zwischen dem ersten Ventilsitz und dem zweiten Ventilsitz bewegbar ist.
Damit wird einerseits eine funktionssichere axiale Führung des kugelförmigen Schließelements sichergestellt und gleichzeitig die Möglichkeit gegeben, den Ventilraum durch Gestaltung der speichenartigen Führungselemente strömungstechnisch hinsichtlich des Durchflusses zwischen dem Zulauf und Verbraucheranschluss zu optimieren, also zur Erzielung vorgegebener Druckkennlienen die erforderlichen Strömungsverluste zu erreichen.
Zu Führung des kurgelförmigen Schließelementes hat sich gemäß einer weiteren Ausgestaltung der Erfindung als vorteilhaft erwiesen, wenn die Führungsflächen der Führungselemente senkrecht zur axialen Richtung an die anliegende Oberflächenform des Schließelements angepasst ist. Da dann allein schon mit zwei gegenüberliegenden Führungsflächen eine Führung des kugelförmigen Schließelementes erreicht wird, kann vorzugweise mit vier kreuzförmig angeordneten Führungselementen eine optimale Funktion erzielt werden.
Erfindungsgemäß sind in axialer Richtung die Führungselemente kürzer als der Ventilraum derart ausgebildet, dass zwischen den zulaufseitigen Stirnflächen der Führungselemente und der zulaufseitigen Begrenzungsfläche des Ventilraums ein vorgegebener Spalt verbleibt. Damit kann die strömungstechnische Optimierung des Ventilraums weiter verbessert werden.

Weiter wird gemäß einer Weiterbildung der Erfindung der Ventilkörper zur Bildung des Ablaufs ablaufseitig in gekannter Weise wenigstens mit einer Radialbohrung versehen, die mit der Axialbohrung verbunden ist.

In weiterer Ausgestaltung des erfindungsgemäßen Ventilkörpers ist dessen Ventilraum zylinderförmig ausgebildet, wodurch sich aufgrund der sich dadurch ergebenden Axialsymmetrie die Herstellung vereinfacht.

Eine einfache Herstellung des erfindungsgemäßen Ventilkörpers ergibt sich gemäß einer vorteilhaften Weiterbildung der Erfindung dadurch, dass der Ventilkörper zweiteilig mit einem ersten und zweiten Ventilkörperteil ausgebaut ist.

Vorzugsweise ist der erste Ventilkörperteil mit einem den Zulauf aufweisenden Grundkörper und einer daran angeformten kreisförmigen Schulter ausgebildet, wobei deren Stirnfläche den ersten Ventilsitz aufweist und eine Begrenzungsfläche des Ventilraums bildet.

In weiterer Ausgestaltung des erfindungsgemäßen Ventilkörpers ist der zweite Ventilkörperteil mit einem den Ablauf aufweisenden Grundkörper und einer daran angeformten kreisförmigen Schulter ausgebildet, wobei die kreisförmige Schulter mit wenigstens der einen Radialbohrung für den Verbraucheranschluss ausgebildet ist und die Stirnfläche der Schulter den zweiten Ventilsitz und die Führungselemente aufweist.

Für den Zusammenbau eines erfindungsgemäßen Ventilkörpers aus derart ausgebildeten ersten und zweiten Ventilkörperteilen ist weiterbildungsgemäß vorgesehen, dass die Schulter des zweiten Ventilkörperteils einen ringförmigen Flansch aufweist, dessen Innendurchmesser dem Außendurchmesser der Schulter des ersten Ventilkörperteils entspricht. Damit lässt sich der zweite Ventilkörperteil zusammen mit einem kugelförmigen Schließelement in einfacher Weise mittels dessen ringförmigen Flansches auf die Schulter des ersten Ventilkörperteils aufschieben und in der gewünschten Position fixieren, bspw. mittels Kleben oder Schweißen.

Gemäß der erfindungsgemäßen Ausbildung des Ventilkörpers zeichnet sich dieser dadurch aus, dass die den Ventilraum des Ventilkörpers mit dem Verbraucheranschluss verbindende Radialbohrung in axialer Richtung derart im Querschnitt profiliert ist, dass in Abhängigkeit der beim Abheben des Schließelementes vom ersten Ventilsitz unter Freigabe der Radialbohrung entstehenden Hubbewegung die geometrische Ausströmfläche monoton zunehmende, konstante oder monoton abnehmende Werte oder eine Kombination von abschnittsweise monoton zunehmenden und/oder konstanten und/oder monoton abnehmenden Werten annimmt.
Damit es möglich durch eine frei wählbare Ausflussgeometrie der Radialbohrung jede vorgegebene Druckkennlinie am Verbraucheranschluss des Ventilkörpers bzw. des einen solchen Ventilkörper aufweisenden Magnetventils zu realisieren. Durch eine solche variable Kontur des Querschnitts der Radialbohrung kann in Abhängigkeit des Hubs des Schließkörpers diese vorgegebene Druckkennlinie gezielt gesteuert werden. In Abhängigkeit des Hubs können damit im Vergleich zum Stand der Technik, bei dem lediglich geometrische Abströmkonturen von einfacher geometrischer Form, wie bspw. Kreise verwendet werden, Ausströmflächen mit steigenden, gleichbleibenden, abfallenden Werten oder in Kombination hiervon realisiert werden, die dadurch entstehen, dass beim Abheben des Schließelementes die Radialbohrung zunehmend freigegeben wird.

In einer Ausgestaltung der Erfindung ist die Radialbohrung im Querschnitt als Dreiecksform profiliert, wobei die Spitze der Dreiecksform ventilsitzseitig angeordnet ist. Hierdurch wird eine Druckkennlinie an dem Verbraucheranschluss realisiert, die einen konvexen Verlauf aufweist.

Gemäß einer anderen Ausgestaltung der Erfindung kann der Querschnitt der Radialbohrung eine Freiform aufweisen, vorzugsweise als T-Form profiliert werden, wobei die T-Form hinsichtlich der axialen Richtung mit einem quer verlaufenden Querschlitz und einem längsverlaufenden Längsschlitz ausgebildet und der Querschlitz ventilsitzseitig angeordnet ist. Besonders vorteilhaft ist es, die Schlitzbreite des Querschlitzes größer als die Schlitzbreite des Längsschlitzes zu wählen. Damit ist es möglich, dass der Wert der Ausströmfläche zunächst monoton ansteigt, solange der Querschlitz der T-Form von dem Schließelement freigegeben wird, um anschließend im Bereich des schmaleren Längsschlitzes in einen nahezu konstanten Wert überzugehen.

Bei einer weiteren Ausgestaltung der Erfindung ist die Radialbohrung im Querschnitt als Ellipse profiliert, wobei vorzugsweise die Längsachse der Ellipse in axialer Richtung verläuft.

Besonders vorteilhaft ist es gemäß einer letzten Weiterbildung der Erfindung mit einer frei wählbaren Ausflussgeometrie, bei der vorzugsweise die Radialbohrung im Querschnitt als regelmäßiges oder unregelmäßiges Polygon ausgebildet ist, jede gewünschte, insbesondere atypische Ausströmfläche zu realisieren, um in Abhängigkeit des Hubs des Schließelements eine vorgegebene Druckkennlinie am Verbraucherausgang zu steuern.

Das Magnetventil gemäß der Erfindung umfasst einen erfindungsgemäßen, ferner einen längsbeweglich geführten Anker, eine elektrisch ansteuerbare Magnetspule zur Bewegung des Ankers, und einen von dem Anker bewegbaren Ventilstößel, der in Wirkverbindung mit dem Schließelement des Ventilkörpers bringbar ist.

Das erfindungsgemäß Magnetventil zeichnet sich dadurch aus, dass der Ventilraum, d. h. die Kavität im Inneren des Magnetventils, das Schließelement und die Anschlüsse derart dimensioniert bzw. ausgelegt sind, dass eine konstante Strömungskraft auf das Schließelement wirkt. Eine derartige Auslegung kann bspw. durch numerische Methoden erreicht werden.

Die Erfindung wird nachfolgend anhand von Ausführungsbeispielen unter Bezugnahme auf die beigefügten Figuren ausführlich beschrieben. Es zeigen:
- Figur 1: eine Seitenansicht eines erfindungsgemäßen Ventilkörpers mit einem ersten und zweiten Ventilkörperteil,
- Figur 2: eine perspektivische Explosionsdarstellung des erfindungsgemäßen Ventilkörpers nach Figur 1 mit einer Sicht auf den ersten Ventilkörperteil,
- Figur 3: eine weitere perspektivische Explosionsdarstellung des erfindungsgemäßen Ventilkörpers gemäß Figur 1 mit einer Sicht auf den zweiten Ventilkörperteil,
- Figur 4: eine Schnittdarstellung des Ventilkörpers gemäß Schnitt A-A nach Figur 1 mit geschlossenem ersten Ventilsitz,
- Figur 5: eine Schnittdarstellung des Ventilkörpers gemäß Schnitt A-A nach Figur 1 mit geöffneten ersten Ventilsitz,
- Figur 6: eine Schnittdarstellung des Ventilkörpers gemäß Schnitt B-B nach Figur 1,
- Figur 7: eine teilaufgeschnittene perspektivische Darstellung eines Magnetventils mit erfindungsgemäßen Ventilkörper,
- Figur 8: eine Hub-Druck-/Durchfluss-Kennlinie zur Erläuterung des Funktionsweise des Magnetventils gemäß Figur 7,
- Figur 9: eine perspektivische Schnittdarstellung eines Magnetventils mit einem erfindungsgemäßen Ventilkörper gemäß einer Ausführungsform der Erfindung,
- Figur 10: eine Explosionsdarstellung des erfindungsgemäßen Ventilkörpers gemäß Figur 9,
- Figur 11: eine perspektivische Schnittdarstellung eines Magnetventils mit einem erfindungsgemäßen Ventilkörper gemäß einer weiteren Ausführungsform der Erfindung,
- Figur 12: eine Explosionsdarstellung des erfindungsgemäßen Ventilkörpers gemäß Figur 11,
- Figur 13: eine perspektivische Darstellung eines zweiten Ventilkörperteils eines Ventilkörpers gemäß Figur 12 mit einer alternativen Querschnittsform der Radialbohrung,
- Figur 14: schematische Teildarstellungen von erfindungsgemäßen Ventilkörpern mit einer dreiecksförmigen bzw. einer T-förmigen Radialbohrung,
- Figur 15: eine Teilschnittdarstellung eines Magnetventils im Bereich eines erfindungsgemäßen Ventilkörpers,
- Figur 16: ein Hub-Druck-Diagramm eines Magnetventils mit einem erfindungsgemäßen Ventilkörper gemäß Figur 14a, und
- Figur 17: ein Hub-Druck-Diagramm eines Magnetventils mit einem erfindungsgemäßen Ventilkörper gemäß Figur 14b.

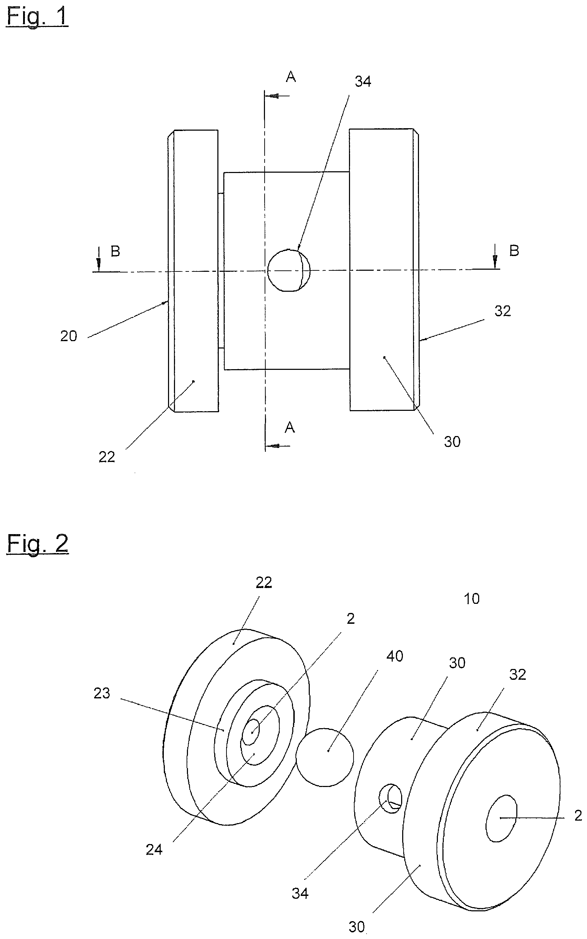

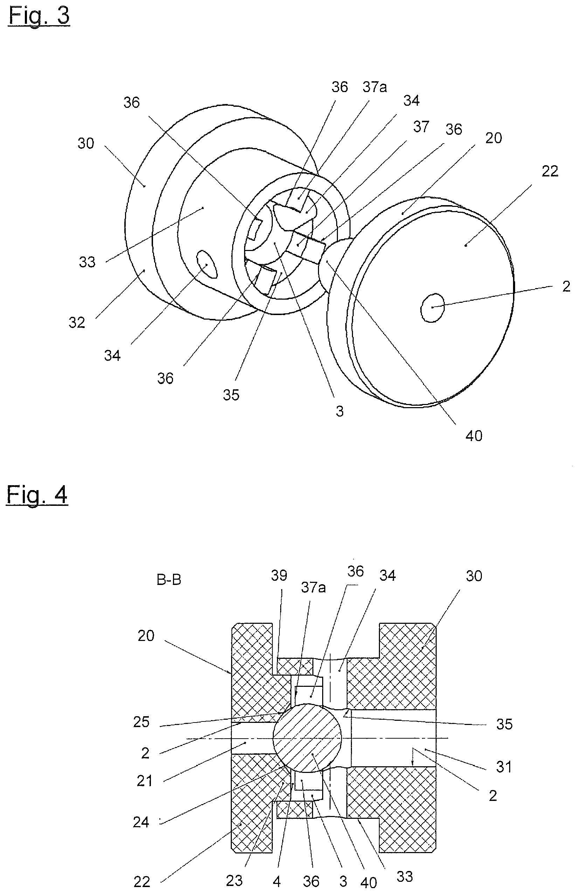

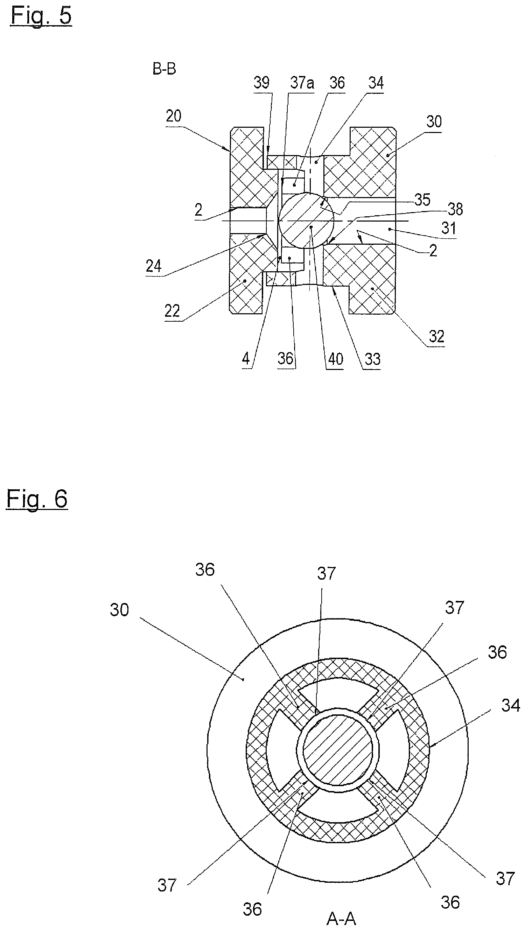

Der in Figur 1 dargestellte Ventilkörper 10 besteht aus mehreren Teilen, die in den Explosionszeichnungen gemäß den Figuren 2 und 3 als erstes Ventilkörperteil 20, als zweites Ventilkörperteil 30 und als Kugel ausgebildetes Schließelement 40 dargestellt sind. Im montierten Zustand des Ventilkörpers 10 verbindet eine Axialbohrung 2 einen Zulauf (P-Anschluss) 21 (siehe Figur 4) an dem ersten Ventilkörperteil 20 mit einem Ablauf (T-Anschluss) 31 (siehe Figur 4) an dem zweiten Ventilkörperteil 30. Ferner trifft eine Querbohrung 34 für einen Verbraucheranschluss (A-Anschluss) die Axialbohrung 2 in einem Ventilraum 3, in dem das Schließelement 40 gelagert ist, wie dies insbesondere aus den Schnittdarstellungen gemäß den Figuren 4 und 5 zu erkennen ist.

Durch eine konstruktive Umlenkung der Querbohrung 34 und des Zulaufs 21 können die externen P- und A-Anschlüsse vertauscht werden, d. h. der Zulauf 21 übernimmt die Funktion des A-Anschlusses und die Querbohrung 34 die Funktion des P-Anschlusses.

Die Explosionsdarstellung nach Figur 2 zeigt eine perspektivische Sicht auf den ersten radialsymmetrisch ausgebildeten Ventilkörperteil 20 auf. Dieser erste Ventilkörperteil 20 umfasst einen scheibenförmigen Grundkörper 20, der an einer dem zweiten Ventilkörperteil 30 zugewandten Stirnfläche eine scheibenförmige Schulter 23 aufweist, die einen die Axialbohrung 2 umlaufenden ersten Ventilsitz 24 aufweist. Zusammen mit dem Schließelement 40 bildet dieser erste Ventilsitz 24 ein erstes Sitzventil 25, wenn entsprechend der Schnittdarstellung nach Figur 4 das Schließelement 40 auf diesem ersten Ventilsitz 24 sitzt und damit den Zulauf 21, der an eine Druckquelle angeschlossen ist, verschließt.

Der zweite Ventilkörperteil 30 des Ventilkörpers 10 ist in ähnlicher Weise radialsymmetrisch mit einem scheibenförmigen Grundkörper 32 und einer scheibenförmigen angeformten Schulter 33 ausgebildet, wobei diese Schulter 33 die Radialbohrung 34 zur Bildung des Verbraucheranschlusses (A-Anschluss) aufnimmt.

Die Axialbohrung 2 in diesem zweiten Ventilkörperteil 30 endet in Richtung des ersten Ventilkörperteils 20 in einem zweiten Ventilsitz 35, der zusammen mit dem Schließelement 40 ein zweites Sitzventil 38 bildet, wenn dieses Schließelement 40 an diesem zweiten Ventilsitz 35 anliegt, wie dies die Schnittdarstellung nach Figur 5 zeigt.

Die gegenüberliegenden Stirnseiten der Schulter 23 des ersten Ventilkörpers 20 und die Schulter 33 des zweiten Ventilkörpers 30 begrenzen in axialer Richtung den Ventilraum 3, der im Wesentlichen zylinderförmig ausgebildet ist und in radialer Richtung von einem umlaufenden Flansch 39 in einer hohlzylindrischen Form begrenzt wird. Gemäß des in Figur 6 dargestellten Schnittes B-B nach Figur 1 sind in diesem Hohlzylinder 39 kreuzförmig, vier speichenartige Führungselemente 36 derart angeformt, dass die nach innen gerichteten Stirnflächen jeweils als Führungsflächen 37 das Schließelement 40 in axialer Richtung zwischen einer Position an dem ersten Ventilsitz 24 und einer Position an dem zweiten Ventilsitz 35 führen. Diese Führungsflächen 37 sind senkrecht zur Axialrichtung entsprechend dem Durchmesser des Schließelements kreisbogenförmig ausgebildet, so dass diese Führungsflächen 37 flächenbündig an der Kugeloberfläche des Schließelements 40 anliegen. Ferner sind die speichenartigen Führungselemente 36 stegartig mit einem rechteckförmigen Querschnitt ausgebildet und rufen bei offenem erstem Sitzventil 25 eine Drosselwirkung für das von dem Zulauf 21 in den Ventilraum 3 strömenden Medium hervor.

Der Zusammenbau der beiden Ventilkörperteile 20 und 30 zusammen mit dem Schließelement 40 zu einem erfindungsgemäßen Ventilkörper nach Figur 1 erfolgt gemäß den Figuren 4 und 5 derart, dass der ringförmige Flansch 39 der Schulter 33 des zweiten Ventilkörperteils 30 auf die Schulter 23 des ersten Ventilkörpers 20 überwurfartig gesteckt wird. In axialer Richtung werden die beiden Ventilkörperteile 20 und 30 so beabstandet, dass zwischen den der Schulter 23 des ersten Ventilkörperteils 20 benachbarten Stirnflächen 37a und der Stirnfläche dieser Schulter 23 ein vorgegebener Spalt 4 verbleibt. Hiermit kann die oben beschrieben Drosselwirkung eingestellt werden. Damit ist die axiale Erstreckung der Führungselemente 36 kürzer als die axiale Erstreckung des Ventilraums 3.

Dieser in den Figuren 1 bis 5 beschriebene Ventilkörper 10 zeichnet sich also dadurch aus, dass für den ersten und zweiten Ventilsitz 24 und 35 zur Bildung des ersten und zweiten Sitzventils 25 und 38 nur ein einziges Schließelement 40 erforderlich ist. Wird ein solcher Ventilkörper 10 für den Aufbau eines Magnetventils, bspw. für ein 3/2-Proportionalventil verwendet, wird das Schließelement 40 bei Bestromung der Magnetspule des Magnetventils von einem Ventilstößel über einen Anker derart betätigt, dass das Schließelement 40 in Abhängigkeit des Spulenstroms Positionen zwischen dem ersten Ventilsitz 24 und dem zweiten Ventilsitz 35 einnehmen kann.

Dabei kann die Position des Schließelements 40 derart gesteuert werden, dass an dem von der Querbohrung 34 gebildeten Verbraucheranschluss (A-Anschluss) ein zum Spulenstrom bzw. zum Hub des Schließelements 40 proportionaler Druckverlauf entsteht.

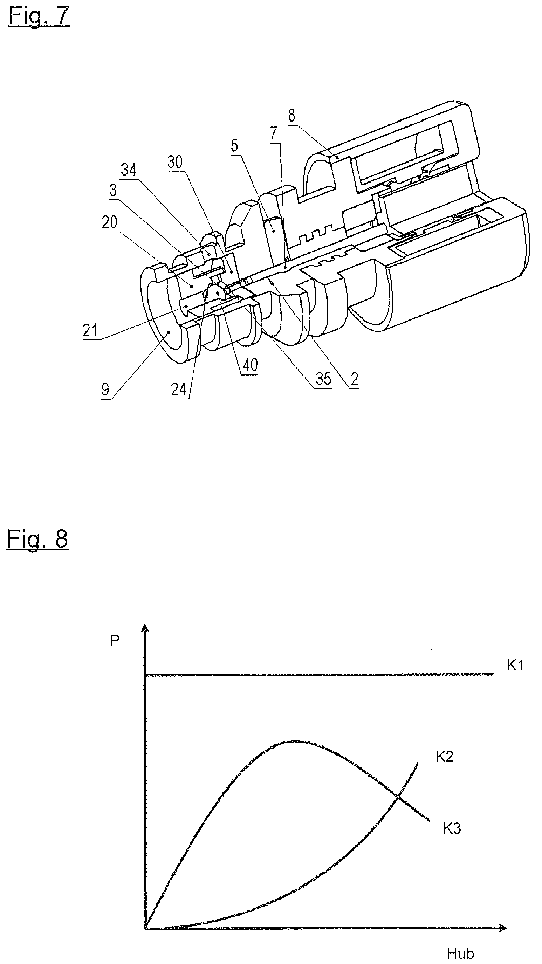

Diese Funktionsweise soll im Folgenden anhand der Hub-Druck-/Durchfluss-Kennlinie gemäß Figur 8 erläutert werden, in der der Druckverlauf an dem Zulauf 21 (P-Anschluss) mit einer Kennlinie K1, der Druckverlauf in der Querbohrung 35, die den Verbraucheranschluss (A-Anschluss) bildet, mit einer Kennlinie K2 und der Durchfluss Q an diesem A-Anschluss mit einer prinzipiellen Kennlinie K3 dargestellt ist.

Ist das erste Sitzventil 25, wie in Figur 4 dargestellt, geschlossen, so entspricht dieser Position des Schließelements 40 dem Nullpunkt des Diagramms nach Figur 8. Mit zunehmendem Hub des Schließelementes 40 wird das erste Sitzventil 25 geöffnet, wodurch ein linear ansteigender Druck P an dem Verbraucheranschluss, also in der Querbohrung 34 gemäß der Kennlinie K2 entsteht. Bei Anliegen des Schließelementes 40 an dem zweiten Ventilsitz 35, also bei geschlossenem zweiten Sitzventil 38 ist der maximale Hub des Schließelements 40 erreicht, so dass nahezu der Druck P des Verbraucheranschlusses den Druck am Zulauf 21 erreicht. Gemäß der Kennlinie K3 nimmt mit zunehmendem Hub zunächst auch der Durchfluss Q zu und fällt nach Erreichen eines Maximums wieder ab.

Mit einem solchen erfindungsgemäßen Ventilkörper 10 aufgebautes proportionales Druckregelventil, das nur ein einziges Schließelement erfordert, verringert sich die Anzahl der benötigten Teile. Ferner müssen die den Ventilkörper bildenden Teile nicht mehr in der bisher erforderlichen Präzision hergestellt, wobei auch die Einstellung der beiden Sitzventile entfällt. Dies führt insgesamt zu erheblich reduzierten Produktionskosten, wobei gleichzeitig ein robuster Ventilaufbau erzielt wird, der insbesondere auch gegenüber Temperatureinflüssen unempfindlicher ist.

Einen beispielhaften Aufbau eines 3/2-Proportionalventils 1 zeigt Figur 7 mit einem Ventilkörper 10, der ebenfalls zweiteilig mit einem ersten Ventilköperteil 20 und einem zweiten Ventilkörperteil 30 aufgebaut ist, wobei der zweite Ventilkörperteil 30 mit einem Ventilgehäuse 8 verbunden ist. Dieses Ventilgehäuse 8 umfasst eine Magnetspule 8, die bei Bestromung einen Anker (nicht dargestellt) betätigt, der seinerseits einen Ventilstößel 7 in axialer Richtung bewegt.

Der zweite Ventilkörperteil 30 umfasst eine Radialbohrung 5 als Abfluss (T-Anschluss), der mit der Axialbohrung 2 verbunden ist und das Medium nach außen abführt. Um den Durchfluss des Mediums von dem Ventilraum 3 in diesen Abfluss 5 zu ermöglichen, ist der Durchmesser des Ventilstößel 7 im Vergleich zum Durchmesser der Axialbohrung 2 geringer ausgeführt. In der sich über die Radialbohrung 5 fortsetzende Axialbohrung 2 wird durch entsprechende Anpassung des Durchmessers des Ventilstößels 7 an die ihn aufnehmende Bohrung eine Dichtwirkung erzielt.

Im Bereich der Axialbohrung 2 des zweiten Ventilkörperteils 30 befindet sich ein zylinderförmiger Ventilraum 3, der über eine Radialbohrung 34 mit dem Verbraucheranschluss (A-Anschluss) verbunden werden kann und ein kugelförmiges Schließelement 40 aufnimmt, wobei ablaufseitig die Axialbohrung 2 einen zweiten Ventilsitz 35 aufweist, der zusammenmit dem Schließelement 40 ein zweites Sitzventil bildet.

An diesen Ventilraum 3 schließt sich eine zylinderförmige Bohrung 9 an, die den an diese Bohrung 9 angepassten, zylinderförmigen ersten Ventilköperteil 20 aufnimmt, der die Axialbohrung 2 aufweist und druckanschlussseitig den Zulauf 21 und gegenüberliegend den ersten Ventilsitz 24 ausbildet, der zusammen mit dem Schließelement 40 das erste Sitzventil 25 bildet. Der Ventilraum 3 wird von der hohlzylindrischen Bohrung 9 durch einen stegartigen Flansch 9a abgegrenzt, der als Anschlag für den in diese Bohrung 9 eingeführten ersten Ventilköperteil 20 dient.

Der Ventilraum 3 des Ventilkörpers 10 nach Figur 7 ist ohne die in den Figuren 1 bis 6 dargestellten Führungselemente ausgebildet. Auch in dieser Ausführungsform des erfindungsgemäßen Ventilkörpers 10 wird das Schließelement 40 mittels des Ventilstößels 7 zwischen den beiden Ventilsitzen 24 und 35 mittels eines Spulenstromes derart gesteuert, dass sich an dem Verbraucheranschluss (A-Anschluss) ebenso ein der Kennlinie K2 entsprechender Druck P einstellt.

Auch dieser Ventilkörper 10 gemäß Figur 7 erfordert zur Steuerung der beiden Sitzventile lediglich nur ein einziges kugelförmiges Schließelement 40, so dass sich auch hier die im Zusammenhang mit der Beschreibung des Ventilkörpers gemäß den Figuren 1 bis 6 genannte Vorteile ergeben, insbesondere ein proportionales Steuerverhalten aufweist.

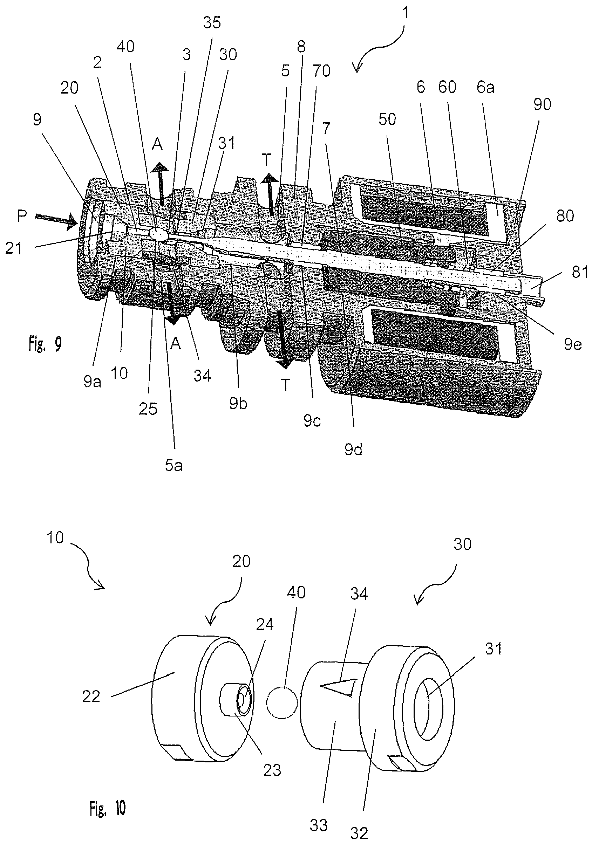

Im Zusammenhang mit den Figuren 9 bis 17 werden weitere Ausführungsbeispiele eines Magnetventils erläutert, bei dem der Querschnitt der Radialbohrung 34 jedoch besonders angepasst ist, um in einfacher Weise bestimmte vorgegebene Druckkennlinien zu realisieren. Dieser Querschnitt weicht von herkömmlichen Radialbohrungen mit kreisrundem Querschnitt in nachfolgend erläuteter Weise ab.

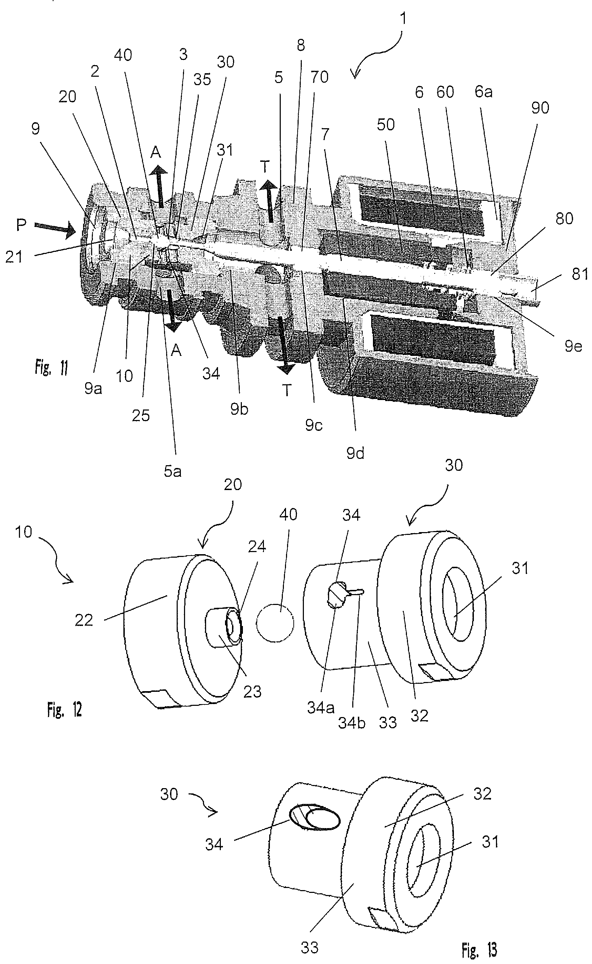

Die in den Figuren 9 und 11 dargestellten 3/2-Proportional-Magnetventile 1 sind identisch aufgebaut, so dass sich im Folgenden deren Beschreibung auf beide Figuren beziehen. Der Unterschied zwischen diesen beiden 3/2-Proportional-Magnetventilen 1 liegt in unterschiedlichen Ausführungen der zugehörigen Ventilkörper 10, die jeweils im Detail im Zusammenhang mit den Figuren 10, 12 und 13 beschrieben werden.

In den Figuren werden identische Elemente oder Teile mit identischen Funktionen mit den gleichen Bezugszeichen versehen.

Das Magnetventil 1 umfasst zur Aufnahme von dessen Bestandteile ein Ventilgehäuse 8 mit einer axialen Bohrung 9, die abschnittsweise mit unterschiedlichen Durchmessern ausgebildet ist.

An einer Stirnseite dieses Ventilgehäuses 8, das einen Druckanschluss P bildet, beginnt die axiale Bohrung 9 mit einem Bohrungsabschnitt 9a, der zur Aufnahme eines erfindungsgemäßen Ventilkörpers 10 mit einem an dessen Umfangsfläche angepassten Durchmesser ausgebildet ist. Unter Ausbildung einer Schulter, an der der Ventilkörper 10 anliegt, schließt sich ein Bohrungsabschnitt 9b mit kleinerem Durchmesser an, wobei der dadurch gebildete Raum über vier, jeweils zwei diametral gegenüberliegenden radialen Bohrungen 5 im Ventilgehäuse 8 mit einem Tankanschluss als Ablauf T in Verbindung steht.

Die axiale Bohrung 9 des Ventilgehäuses 8 setzt mit einem Bohrungsabschnitt 9c fort, der eine Lagerbuchse 70 zur Lagerung eines Ventilstößels 7 aufnimmt. Anschließend weitet sich die axiale Bohrung 9 in einen Bohrungsabschnitt 9d auf, der einen mit dem Ventilstößel 7 fest verbundenen und beweglichen Anker 50 aufnimmt. Das Ventilgehäuse 8 wird auf dieser Seite von einem Polkern 90 verschlossen, der die axiale Bohrung 9 mit einem Bohrungsabschnitt 9e abschließt. Dieser Bohrungsabschnitt 9e nimmt eine weitere Lagerbuchse 80 auf, mit der für den Ventilstößel 7 eine zweite Lagerung zur Verfügung steht. Eine Hülse 81 bildet den Gehäuseabschluss.

Weiterhin weist das Ventilgehäuse 8 im Bereich des Ankers 50 einen denselben torusförmig umlaufenden Aufnahmeraum zur Aufnahme einer auf einem Spulenkern 6a gewickelten Magnetspule 6.

Um den Ventilstößel 7 im unbestromten Zustand zu halten, befindet sich zwischen den gegenüberliegenden Stirnflächen des Ankers 50 und des Polkerns 90 eine Druckfeder 60. Dabei stützt sich diese Druckfeder 60 einerseits am Polkern 60 gegen eine Polfäche und andererseits gegen den Grund eines Sacklochs im Anker 50 ab. Die Polfäche wird von einem kreisförmigen, sich konisch verjüngenden Flansch umgeben, in den der Anker 50 bei einer Bestromung der Magnetspule gegen die Federkraft der Druckfeder 60 eintaucht.

Der in dem Bohrungsabschnitt 9a angeordnete Ventilkörper 10 besteht aus mehreren Teilen, die in den Explosionszeichnungen gemäß den Figuren 10 und 12 als erstes Ventilkörperteil 20, als zweites Ventilkörperteil 30 und als kugelförmiges Schließelement 40 dargestellt sind. Im in das Ventilgehäuse 8 montierten Zustand des Ventilkörpers 10 verbindet eine Axialbohrung 2 einen Zulauf (P-Anschluss) 21 an dem ersten Ventilkörperteil 20 mit einem Ablauf 31 an dem zweiten Ventilkörperteil 30, der über den Bohrungsabschnitt 9b mit den radialen Bohrungen 5 im Ventilgehäuse 8 bei entsprechender Steuerung des Ventilstößel 7 verbunden werden kann.

Ferner treffen zwei diametral gegenüberliegende Querbohrungen 34, die mit dem Verbraucheranschluss (A-Anschluss) 5a in Verbindung stehen, die Axialbohrung 2 in einem Ventilraum 3, in dem das Schließelement 40 gelagert ist. Dieses Schließelement 40 bildet zusammen mit einem an dem ersten Ventilkörperteil 20 ausgebildeten ersten Ventilsitz 24 ein erstes Sitzventil 25. Gemäß Figur 2 umfasst das erste Ventilkörperteil 20 einen scheibenförmigen Grundkörper 20, der an einer dem zweiten Ventilkörperteil 30 zugewandten Stirnfläche eine scheibenförmige Schulter 23 aufweist, die den die Axialbohrung 2 umlaufenden ersten Ventilsitz 24 aufnimmt.

Der zweite Ventilkörperteil 30 des Ventilkörpers 10 ist in ähnlicher Weise radialsymmetrisch mit einem scheibenförmigen Grundkörper 32 und einer scheibenförmigen angeformten Schulter 33 ausgebildet, wobei diese Schulter 33 die Radialbohrungen 34 aufnimmt.

Die Axialbohrung 2 in diesem zweiten Ventilkörperteil 30 endet in Richtung des ersten Ventilkörperteils 20 in einem zweiten Ventilsitz 35, der zusammen mit dem Schließelement 40 ein zweites Sitzventil bildet, wenn dieses Schließelement 40 an diesem zweiten Ventilsitz 35 anliegt.

Die gegenüberliegenden Stirnseiten der Schulter 23 des ersten Ventilkörperteils 20 und der Schulter 33 des zweiten Ventilkörperteils 30 begrenzen in axialer Richtung den Ventilraum 3, der im Wesentlichen zylinderförmig ausgebildet ist.

Bei diesem Ventilkörper 10 dient das Schließelement 4 zusammen mit dem ersten bzw. zweiten Ventilsitz 24 bzw. 35 zur Bildung des ersten und zweiten Sitzventils. Im unbestromten Zustand der Magnetspule 6 wird der erste Ventilsitz 24 durch das Schließelement 40 verschlossen. Bei Bestromung der Magnetspule 6 des Magnetventils 1 wird der Ventilstößel 7 mittels des Ankers 50 derart betätigt, dass das Schließelement 40 in Abhängigkeit des Spulenstroms eine Hubbewegung zwischen dem ersten Ventilsitz 24 und dem zweiten Ventilsitz 35 durchführt und in Abhängigkeit seiner Position, also in Abhängigkeit des Hubs die Radialbohrungen 34 mehr oder weniger freigibt und dadurch sich am Verbraucheranschluss A ein steuerbarer Druck einstellt.

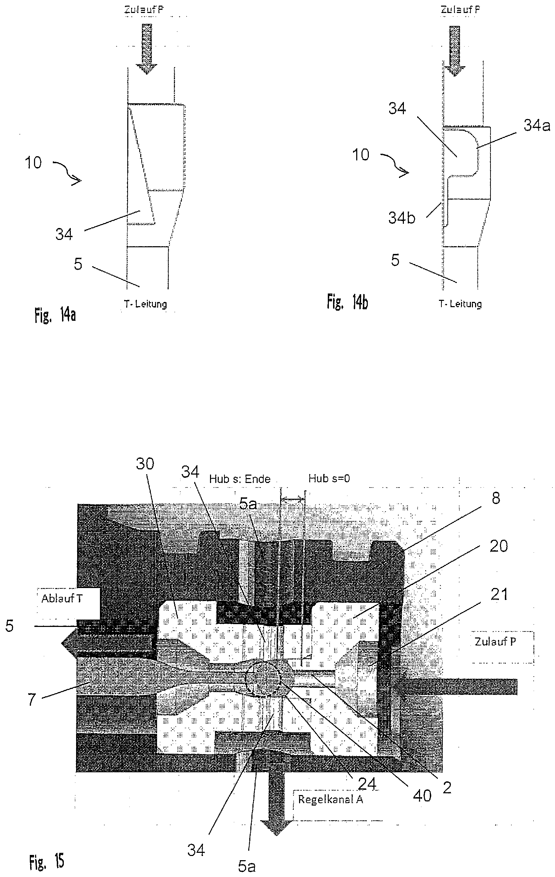

Diese Situation ist schematisch in Figur 15 dargestellt, wonach im unbestromten Zustand des Magnetventils 1 das Schließelement 40 den ersten Ventilsitz 24 verschließt. Diese Position des Schließelements 40 entspricht einem Hub s mit s=0. Mit zunehmender Bestromung nimmt auch der Hub s des Schließelements 40 bis zu einem maximalen Wert zu, bei dem gemäß Figur 15 das Schließelement 40 die gestrichelt gezeichnete Position erreicht hat.

Die Radialbohrung 34 den Ventilkörpers 10 nach Figur 10 und Figur 14a weist in dessen axialer Richtung einen Querschnitt in der Form eines gleichseitigen Dreiecks auf, wobei die Spitze dieses Dreiecks benachbart zum ersten Ventilsitz 24 angeordnet ist. Bei zunehmender Bestromung des Magnetventils 1 nimmt der Hub des Schließelements 40 zu, so dass zuerst der Bereich der Spitze des die Radialbohrung 34 bildenden Dreiecks freigegeben wird und im weiteren Verlauf der Hubbewegung der Wert der Ausströmfläche monoton steigend so lange zunimmt, bis das Schließelement 40 die Radialbohrung 34 vollständig freigegeben hat.

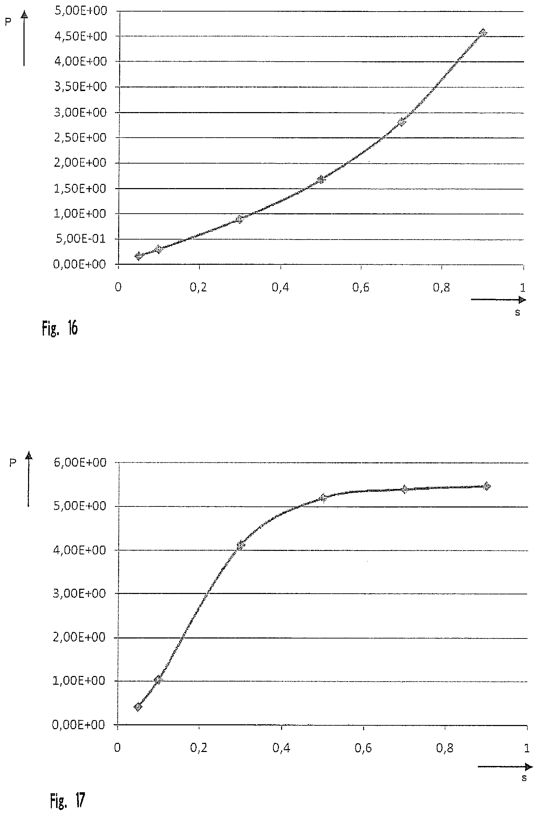

Der sich dabei einstellende Druckverlauf an dem Verbraucheranschluss A ist in dem s-P-Diagramm nach Figur 16 dargestellt, das bei einem Druck am P-Anschluss mit 5,5 bar aufgenommen wurde, wobei der T-Anschluss drucklos ist. Der an dem Verbraucheranschluss A sich einstellende Regeldruck zeigt einen leicht konvexen Verlauf.

Das 3/2-Proportional-Magnetventile 1 gemäß Figur 11 entspricht in seinem Aufbau demjenigen nach Figur 12, jedoch weist der Ventilkörper 10 gemäß Figur 4 im Unterschied zu demjenigen nach Figur 10 eine Radialbohrung 34 auf, deren Querschnitt eine T-Form mit einem Querschlitz 34a und einem Längsschlitz 34b bildet, wobei die Schlitzbreite des Querschlitzes 34a wesentlich größer ist als die Schlitzbreite des Längsschlitzes 34b, so dass der Querschlitz 34a die Form eines Rechtecks mit abgerundeten Kanten darstellt, das nahezu quadratisch ist.

Die T-förmige Radialbohrung 34 ist so ausgebildet, dass deren Querschlitz 34a benachbart zum ersten Ventilsitz 24 liegt, also so, dass bei einer beginnenden Bestromung des Magnetventils 1 zuerst dieser Querschlitz 34a freigegeben wird, wie dies insbesondere aus Figur 14b ersichtlich ist. Damit ergibt sich ein Verlauf des Wertes für die Ausströmfläche, der zunächst monoton steigend zunimmt, jedoch gegenüber einer dreiecksförmigen Radialbohrung 34 gemäß Figur 10 mit einer größeren, leicht konkav verlaufenden Steigung. Mit zunehmenden Hub s des Schließelements 40 wird auch der Längsschlitz 34b freigeben, wodurch nur noch ein geringer Zuwachs des Wertes der Ausströmfläche erreicht wird, das bedeutet, dass der Wert der Ausströmfläche nahezu konstant bleibt.

Diese Verlaufssituation der Ausströmfläche mit einer T-förmigen Radialbohrung 34 zeigt sich auch im Verlauf des sich am Verbraucheranschluss A einstellenden Regeldrucks, der in Figur 9 dargestellt ist. Dieses s-P-Diagramm wurde ebenso bei einem Druck von 5,5 bar am P-Anschluss aufgenommen, wobei der T-Anschluss drucklos ist. Hiernach nimmt der Regeldruck leicht konkav mit steilem Anstieg zu und geht dann in einen nahezu konstanten Wert über.

Die in den Figuren 9 bis 12 dargestellten Ventilkörper 10 mit einer Radialbohrung 34, die entweder einen dreiecksförmigen oder einen T-förmigen Querschnitt aufweisen, sind beispielhaft dargestellt und erläutert. Die Ausflussgeometrie kann frei gewählt werden, um jede vorgegebene Druckkennlinie zu realisieren. Durch die variable Kontur der Auslassgeometrie kann in Abhängigkeit des Hubs s die entsprechende Druckkennlinie gezielt gesteuert werden.

Als weiteres Beispiel einer frei wählbaren Ausflussgeometrie zeigt Figur 13 einen zweiten Ventilkörperteil 30 eines Ventilkörpers 10, bei dem die Radialbohrung 34 ellipsenförmig ausgebildet ist.

Um atypische Ausflussgeometrien zu realisieren, können Radialbohrungen mit Querschnitten realisiert werden, die Kombinationen von regelmäßigen oder unregelmäßigen geometrischen Figuren darstellen, die dann zu Werteverläufen der Ausflussflächen führen, die Kombinationen aus Abschnitten mit monoton steigenden, konstanten oder monoton abfallenden Werten entsprechen.

### Bezugszeichenliste

- 1: Magnetventil
- 2: Axialbohrung
- 3: Ventilraum
- 4: Spalt im Ventilraum 3
- 5: Radialbohrung als Ablauf
- 5a: Radialbohrung als Verbraucheranschluss A
- 6: Magnetspule
- 6a: Spulenkörper der Magnetspule 6
- 7: Ventilstößel
- 8: Ventilgehäuse
- 9: axiale Bohrung im Ventilgehäuse 8
- 9a: Bohrungsabschnitt der axialen Bohrung 9
- 9b: Bohrungsabschnitt der axialen Bohrung 9
- 9c: Bohrungsabschnitt der axialen Bohrung 9
- 9d: Bohrungsabschnitt der axialen Bohrung 9
- 9e: Bohrungsabschnitt der axialen Bohrung 9

- 10: Ventilkörper

- 20: erstes Ventilkörperteil
- 21: Zulauf
- 22: Grundkörper
- 23: Schulter
- 24: erster Ventilsitz
- 25: erstes Sitzventil
- 30: zweites Ventilkörperteil
- 31: Ablauf
- 32: Grundkörper
- 33: Schulter
- 34: Radialbohrung
- 34a: Querschlitz der T-förmigen Radialbohrung 34
- 34b: Längsschlitz der T-förmigen Radialbohrung 34
- 35: zweiter Ventilsitz
- 36: Führungselemente
- 37: Führungsflächen des Führungselements 36
- 37a: zulaufseitige Stirnfläche des Führungselements 36
- 38: zweites Sitzventil
- 39: ringförmiger Flansch

- 40: Schließelement

- 50: Anker

- 60: Druckfeder

- 70: Lagerbuchse

- 80: Lagerbuchse
- 81: Gehäuseabschluss

- 90: Polkern

## Patentansprüche

1. Ventilkörper (10) für ein proportionales 3/2 Magnetventil (1) umfassend,
- eine Axialbohrung (2), die einen Zulauf (21) für den Anschluss einer Druckquelle mit einem Ablauf (31) verbindet,
- einen Ventilraum (3) im Bereich der Axialbohrung (2), in welchem zulaufseitig ein erster Ventilsitz (24) ausgebildet ist,
- wenigstens eine Radialbohrung (34), die den Ventilraum (3) mit einem Verbraucheranschluss verbindet,
- ein Schließelement (40), das zusammen mit dem ersten Ventilsitz (24) ein erstes Sitzventil (25) zum Verschließen der zulaufseitigen Axialbohrung (2) bildet, und
- ein zweites Sitzventil (38), wobei
- in dem Ventilraum (3) ablaufseitig ein zweiter Ventilsitz (35) vorgesehen ist, und
- das Schließelement (40) zusammen mit dem zweiten Ventilsitz (35) das zweite Sitzventil (38) zum Verschließen der ablaufseitigen Axialbohrung (2) bildet und im Wesentlichen kugelförmig ausgebildet ist, und
- der Ventilraum (3) mit wenigstens zwei hinsichtlich eines Durchmessers des kugelförmigen Schließelementes (40) gegenüberliegenden und radialverlaufenden, Führungselementen (36) mit axialseitigen Führungsflächen (37) zur axialen Führung des kugelförmigen Schließelementes (40) derart ausgestaltet ist, dass das kugelförmige Schließelement (40) zwischen den Führungsflächen (37) im Wesentlichen nur in axialer Richtung zwischen dem ersten Ventilsitz (24) und dem zweiten Ventilsitz (35) bewegbar ist, wobei die Führungselemente (36) speichenartig und in axialer Richtung kürzer als der Ventilraum (3) derart ausgebildet sind, dass zwischen den zulaufseitigen Stirnflächen (37a) der Führungselemente (36) und der zulaufseitigen Begrenzungsfläche des Ventilraums (3) ein vorgegebener Spalt (4) verbleibt, **dadurch gekennzeichnet, dass** die den Ventilraum (3) des Ventilkörpers (10) mit dem Verbraucheranschluss (A) verbindende Radialbohrung (34) in axialer Richtung derart im Querschnitt profiliert ist, dass in Abhängigkeit von der beim Abheben des Schließelementes (40) vom ersten Ventilsitz (24) unter Freigabe der Radialbohrung (34) entstehenden Hubbewegung (s) die geometrische Ausströmfläche monoton zunehmende, konstante oder monoton abnehmende Werte oder eine Kombination von abschnittsweise monoton zunehmenden und/oder konstanten und/oder monoton abnehmenden Werten annimmt.

2. Ventilkörper (10) nach Anspruch 1,
**dadurch gekennzeichnet, dass**
die Führungsflächen (37) der Führungselemente (36) senkrecht zur axialen Richtung an die anliegende Oberflächenform des Schließelements (40) angepasst ist.

3. Ventilkörper (10) nach Anspruch 1 oder 2,
**dadurch gekennzeichnet, dass**
vier kreuzförmig angeordnete Führungselemente (36) vorgesehen sind.

4. Ventilkörper (10) nach einem der vorhergehenden Ansprüche,
**dadurch gekennzeichnet, dass**
zur Bildung des Ablaufs (31) der Ventilkörper (3) ablaufseitig wenigstens eine Radialbohrung (5) aufweist, die mit der Axialbohrung (2) verbunden ist.

5. Ventilkörper (10) nach einem der vorhergehenden Ansprüche,
**dadurch gekennzeichnet, dass**
der Ventilraum (3) zylinderförmig ausgebildet ist.

6. Ventilkörper (10) nach einem der vorhergehenden Ansprüche,
**dadurch gekennzeichnet, dass**
der Ventilkörper (10) wenigstens zweiteilig mit einem ersten und zweiten Ventilkörperteil (20, 30) ausgebildet ist.

7. Ventilkörper (10) nach Anspruch 6,
**dadurch gekennzeichnet, dass**
der erste Ventilkörperteil (20) mit einem den Zulauf (21) aufweisenden Grundkörper (22) und einer daran angeformten kreisförmigen Schulter (23) ausgebildet ist, wobei deren Stirnfläche den ersten Ventilsitz (24) aufweist und eine Begrenzungsfläche des Ventilraums (3) bildet.

8. Ventilkörper (10) nach Anspruch 6 oder 7,
**dadurch gekennzeichnet, dass**
- der zweite Ventilkörperteil (30) mit einem den Ablauf (31) aufweisenden Grundkörper (32) und einer daran angeformten kreisförmigen Schulter (33) vorgesehen ist,
- die kreisförmige Schulter (33) mit wenigstens der einen Radialbohrung (34) für den Verbraucheranschluss ausgebildet ist, und
- die Stirnfläche der Schulter (33) den zweiten Ventilsitz (35) und die Führungselemente (36) aufweist.

9. Ventilkörper (10) nach Anspruch 7 und 8,
**dadurch gekennzeichnet, dass**
die Schulter (33) des zweiten Ventilkörperteils (30) einen ringförmigen Flansch (39) aufweist, dessen Innendurchmesser dem Außendurchmesser der Schulter (23) des ersten Ventilkörperteils (20) entspricht.

10. Ventilkörper (10) nach Anspruch 6,
**dadurch gekennzeichnet, dass**
der erste Ventilkörperteil (20) zylinderförmig ausgebildet ist und von einer zylinderförmigen Bohrung (9) des zweiten Ventilkörperteils (30 aufgenommen wird.

11. Ventilkörper (10) nach Anspruch 10,
**dadurch gekennzeichnet, dass**
der erste Ventilkörperteil (20) die axiale Bohrung (2) zur Bildung des Zulaufs (21) und zur Bildung des ersten Ventilsitzes (24) aufweist.

12. Ventilkörper (10) nach einem der vorhergehenden Ansprüche,
**dadurch gekennzeichnet, dass**
die Radialbohrung (34) im Querschnitt als Dreiecksform profiliert ist, wobei die Spitze der Dreiecksform ventilsitzseitig angeordnet ist.

13. Ventilkörper (10) nach einem der vorhergehenden Ansprüche,
**dadurch gekennzeichnet, dass**
die Radialbohrung (34) im Querschnitt als T-Form profiliert ist, wobei die T-Form hinsichtlich der axialen Richtung mit einem quer verlaufenden Querschlitz (34a) und einem längsverlaufenden Längsschlitz (34b) ausgebildet ist und der Querschlitz (34a) ventilsitzseitig angeordnet ist.

14. Ventilkörper (10) nach Anspruch 13,
**dadurch gekennzeichnet, dass**
die Schlitzbreite des Querschlitzes (34a) größer als die Schlitzbreite des Längsschlitzes (34b) gewählt ist.

15. Ventilkörper (10) nach einem der vorhergehenden Ansprüche,
**dadurch gekennzeichnet, dass**
die Radialbohrung (34) im Querschnitt als Ellipse profiliert ist.

16. Ventilkörper (10) nach Anspruch 15,
**dadurch gekennzeichnet, dass**
die Längsachse der Ellipse (34) in axialer Richtung verläuft.

17. Ventilkörper (10) nach einem der vorhergehenden Ansprüche,
**dadurch gekennzeichnet, dass**
die Radialbohrung (34) im Querschnitt als regelmäßiges oder unregelmäßiges Polygon ausgebildet ist.

18. Magnetventil (1) mit einem Ventilkörper (10) gemäß einem der vorhergehenden Ansprüche, umfassend
- einen längsbeweglich geführten Anker (50),
- eine elektrisch ansteuerbare Magnetspule (6) zur Bewegung des Ankers (6), und
- einen von dem Anker bewegbaren Ventilstößel (8), der in Wirkverbindung mit dem Schließelement (40) des Ventilkörpers (10) bringbar ist.

## Claims

1. Valve body (10) for a proportional 3/2 solenoid valve (1), comprising
- an axial bore (2) which connects an inlet (21) for the connection of a pressure source to an outlet (31),
- a valve chamber (3) in the region of the axial bore (2), in which a first valve seat (24) is constructed at the inlet end,
- at least one radial bore (34) which connects the valve chamber (3) to a consumer load connection,
- a closure element (40) which, together with the first valve seat (24), forms a first poppet valve (25) for closing the axial bore (2) at the inlet end, and
- a second poppet valve (38), wherein
- a second valve seat (35) is provided in the valve chamber (3) at the outlet end, and
- the closure element (40), together with the second valve seat (35), forms the second poppet valve (38) for closing the axial bore (2) at the outlet end and is substantially spherical, and
- the valve chamber (3) with at least two guide elements (36), which are opposing and extend radially with respect to a diameter of the spherical closure element, with guide surfaces (37) on the axial side for axial guiding of the spherical closure element (40), is configured in such a way that the spherical closure element (40) between the guide surfaces (37) is movable substantially only in an axial direction between the first valve seat (24) and the second valve seat (35), wherein the guide elements (36) are formed like spokes and are shorter in the axial direction than the valve chamber (3) in such a way that a predetermined gap (4) remains between the end surfaces (37a) of the guide element (36) at the inlet end and the boundary surface of the valve chamber (3) at the inlet end, **characterised in that**
the radial bore (34) connecting the valve chamber (3) of the valve body (10) to the consumer load connection (A) is profiled in cross-section in such a way that, depending upon the lifting movement (s) produced during lifting off of the closure element (40) from the first valve seat (24) and opening of the radial bore (34), the geometric outflow surface has monotonically increasing, constant or monotonically decreasing values or a combination of partially monotonically increasing and/or constant and/or monotonically decreasing values.

2. Valve body (10) according to claim 1, **characterised in that** the guide surfaces (37) of the guide elements (36) perpendicular to the axial direction are adapted to the abutting surface shape of the closure element (40).

3. Valve body (10) according to claim 1 or 2, **characterised in that** four guide elements (36) arranged in the shape of a cross are provided.

4. Valve body (10) according to one of the preceding claims, **characterised in that** in order to form the outlet (31) the valve body (3) has at least one radial bore (5) at the outlet end which is connected to the axial bore (2).

5. Valve body (10) according to one of the preceding claims, **characterised in that** the valve chamber (3) is cylindrical.

6. Valve body (10) according to one of the preceding claims, **characterised in that** the valve body (10) is formed at least in two parts with a first and second valve body part (20, 30).

7. Valve body (10) according to claim 6, **characterised in that** the first valve body part (20) is designed with a main body (22) comprising the inlet and with a circular shoulder (23) formed thereon, wherein the end surface thereof comprises the first valve seat (24) and forms a boundary surface of the valve chamber (3).

8. Valve body (10) according to claim 6 or 7, **characterised in that** the second valve body part (30) is designed with a main body (32) comprising the inlet (31) and with a circular shoulder (33) formed thereon is provided.
- the circular shoulder (33) is formed with the at least one radial bore (34) for the consumer load connection, and
- the abutting surface of the shoulder (33) comprises the second valve seat (35) and the guide elements (36).

9. Valve body (10) according to claim 7 and 8, **characterised in that** the shoulder (33) of the second valve body part (30) has an annular flange (39), the internal diameter of which corresponds to the external diameter of the shoulder (23) of the first valve body part (20).

10. Valve body (10) according to claim 6, **characterised in that** the first valve body part (20) is cylindrical and is received by a cylindrical bore (9) of the second valve body part (30).

11. Valve body (10) according to claim 10, **characterised in that** the first valve body part (20) comprises the axial bore (2) in order to form the inlet (21) and to form the first valve seat (24).

12. Valve body (10) according to one of the preceding claims, **characterised in that** in cross-section the radial bore (34) is profiled as a triangular shape, wherein the tip of the triangular valve is arranged at the seat end.

13. Valve body (10) according to one of the preceding claims, **characterised in that** in cross-section the radial bore (34) is profiled as a T shape, wherein with regard to the axial direction the T shape is formed with a transversely extending transverse slot (34a) and a longitudinally extending slot (34b), and the transverse slot (34a) is arranged at the valve end.

14. Valve body (10) according to claim 13, **characterised in that** the slot width of the transverse slot (34a) is chosen to be greater than the slot width of the longitudinal slot (34b).

15. Valve body (10) according to one of the preceding claims, **characterised in that** in cross-section the radial bore (34) is profiled as an ellipse.

16. Valve body (10) according to claim 15, **characterised in that** the longitudinal axis of the ellipse (34) extends in the axial direction.

17. Valve body (10) according to one of the preceding claims, **characterised in that** in cross-section the radial bore (34) is formed as a regular or irregular polygon.

18. Solenoid valve (1) with a valve body (10) according to any one of the preceding claims, comprising
- a longitudinally movably guided armature (50),
- an electrically controllable solenoid coil (6) for moving the armature (6), and
- a valve tappet (8) which is movable by the armature and can be operatively connected to the closure element (40) of the valve body (10).

## Revendications

1. Corps de soupape (10) destiné à une soupape magnétique 3/2 proportionnelle (1) comprenant :
- un perçage axial (2) qui relie une entrée (21) de connexion à une source de pression avec une sortie (31),
- une chambre de soupape (3) située dans la zone du perçage axial (2) et dans laquelle est formé côté entrée un premier siège de soupape (24),
- au moins un perçage radial (34) qui relie la chambre de soupape (3) avec une connexion de consommateur,
- un élément de fermeture (40) qui forme, avec le premier siège de soupape (24) une première soupape de siège (25) permettant de fermer le perçage axial (2) côté entrée,
- une seconde soupape de siège (38),
- dans la chambre de soupape (3) étant prévu, côté sortie, un second siège de soupape (35),
- l'élément de fermeture (40) forme, avec le second siège de soupape (35) la seconde soupape à siège (38) pour permettre de fermer le perçage axial (2) côté sortie, et est essentiellement en forme de sphère,
- la chambre de soupape (3) est réalisée avec au moins deux éléments de guidage (36) opposés par rapport au diamètre de l'élément de fermeture en forme de sphère (40) et s'étendant radialement, ayant des surfaces de guidage (37) côté axial pour permettre un guidage axial de l'élément de fermeture en forme de sphère (40) de sorte que l'élément de fermeture en forme de sphère (40) ne puisse être déplacé entre les surfaces de guidage (37) qu'essentiellement en direction axiale entre le premier siège de soupape (24) et le second siège de soupape (35), les éléments de guidage (36) étant réalisé en forme de rayons et plus courts en direction axiale que la chambre de soupape (3) de sorte qu'entre les surfaces frontales côté entrée (37a) des éléments de guidage (36) et la surface limite côté entrée de la chambre de soupape (3) il subsiste un intervalle (4) prédéfini,
**caractérisé en ce que**
le perçage radial (34) reliant la chambre de soupape (3) du corps de soupape (10) avec la connexion de consommateur (A), a une section profilée en direction axiale de sorte qu'en fonction de la course (S) se produisant lors de la levée de l'élément de fermeture (40) du premier siège de soupape (24) en libérant le perçage radial (34) la surface d'écoulement géométrique prenne des valeurs augmentant de façon monotone, constantes ou descendant de façon monotone, ou une combinaison par segment de valeurs augmentant de façon monotone et/ou constantes et/ou diminuant de façon monotone.

2. Corps de soupape (10) conforme à la revendication 1, **caractérisé en ce que**
la surface de guidage (37) des éléments de guidage (36) est adaptée perpendiculairement à la direction axiale à la forme de la surface appliquée de l'élément de fermeture (40) .

3. Corps de soupape (10) conforme à la revendication 1 ou 2,
**caractérisé en ce qu'**
il est prévu quatre éléments de guidage (36) positionnés en forme de croix.

4. Corps de soupape (10) conforme à l'une des revendications précédentes,
**caractérisé en ce que**
pour permettre de former la sortie (31), le corps de soupape (3) comporte côté sortie au moins un perçage radial (5) qui est relié au perçage axial (2).

5. Corps de soupape (10) conforme à l'une des revendications précédentes,
**caractérisé en ce que**
la chambre de soupape (3) est en forme de cylindre.

6. Corps de soupape (10) conforme à l'une des revendications précédentes,
**caractérisé en ce que**
le corps de soupape (10) est réalisé en au moins deux parties avec une première partie de corps de soupape et une seconde partie de soupape (20, 30).

7. Corps de soupape (10) conforme à la revendication 6, **caractérisé en ce que**
la première partie (20) du corps de soupape comporte un corps de base (22) tourné vers l'entrée (21) et un épaulement (23) circulaire qui y est formé, dont la surface frontale comporte le premier siège de soupape (24) et forme une surface de limitation de la chambre de soupape (3).

8. Corps de soupape (10) conforme à la revendication 6 ou 7,
**caractérisé en ce que**
la seconde partie du corps de soupape (30) est équipée d'un corps de base (32) tourné vers la sortie (31) et d'un épaulement circulaire (33) qui y est formé,
- l'épaulement circulaire (33) comporte au moins un perçage radial (34) pour permettre la connexion d'un consommateur,
- la surface frontale de l'épaulement (33) comporte le second siège de soupape (35) et les éléments de guidage (36).

9. Corps de soupape (10) conforme à la revendication 7 ou 8,
**caractérisé en ce que**
l'épaulement (33) de la seconde partie du corps de soupape (30) comporte une bride annulaire (39) dont le diamètre interne correspond au diamètre externe de l'épaulement (23) de la première partie du corps des soupape (20).

10. Corps de soupape (10) conforme à la revendication 6, **caractérisé en ce que**
la première partie du corps de soupape (20) est en forme de cylindre et est logée dans le perçage en forme de cylindre (9) de la seconde partie (30) du corps de soupape.

11. Corps de soupape (10) conforme à la revendication 10, **caractérisé en ce que**
la première partie du corps de soupape (20) comporte le perçage axial (2) permettant de former l'entrée (21) et de former le premier siège de soupape (24).

12. Corps de soupape (10) conforme à l'une des revendications précédentes,
**caractérisé en ce que**
la section du perçage radial (34) est profilée sous la forme d'un triangle, la pointe du triangle étant positionné côté siège de soupape.

13. Corps de soupape (10) conforme à l'une des revendications précédentes,
**caractérisé en ce que**
le perçage radial (34) a une section profilée en forme de T, la forme de T comportant en direction axiale une fente transversale (34a) s'étendant transversalement et une fente longitudinale (34b) s'étendant longitudinalement, et la fente transversale (34a) est située côté siège de soupape.

14. Corps de soupape (10) conforme à la revendication 13, **caractérisé en ce que**
la largeur de la fente transversale (34a) est supérieure à la largeur de la fente longitudinale (34b).

15. Corps de soupape (10) conforme à l'une des revendications précédentes,
**caractérisé en ce que**
le perçage radial (34) a une section profilée sous la forme d'une ellipse.

16. Corps de soupape (10) conforme à la revendication 15, **caractérisé en ce que**
l'axe longitudinal de l'ellipse (34) s'étend en direction axiale.

17. Corps de soupape (10) conforme à l'une des revendications précédentes,
**caractérisé en ce que**
le perçage radial (34) est réalisé en section sous la forme d'un polygone régulier ou non régulier.

18. Soupape magnétique (1) comportant un corps de soupape (10) conforme à l'une des revendications précédentes comprenant :
- un induit (50) mobile longitudinalement,
- une bobine magnétique (6) à commande électrique permettant de déplacer l'induit (6), et
- une tige de soupape (8) mobile avec l'induit et qui peut être mise en liaison active avec l'élément de fermeture (40) du corps de soupape.
